# EUROPÄISCHE PATENTSCHRIFT

(11) **EP 3 568 577 B1**
(45) Veröffentlichungstag und Bekanntmachung des Hinweises auf die Patenterteilung: **10.03.2021**
(21) Anmeldenummer: 18700039.3
(22) Anmeldetag: 10.01.2018
(51) Int. Cl.: F01N 9/00, F01N 3/021

(54) **VERFAHREN ZUR REGENERATION EINES PARTIKELFILTERS**
METHOD FOR REGENERATING A PARTICLE FILTER
PROCÉDÉ DE RÉGÉNÉRATION D'UN FILTRE À PARTICULES

(30) Priorität: 12.01.2017 DE 102017100500
(43) Veröffentlichungstag der Anmeldung: 20.11.2019
(73) Patentinhaber: Volkswagen Aktiengesellschaft, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE)
(74) Vertreter: Gulde & Partner
(86) Internationale Anmeldenummer: PCT/EP2018/050509
(87) Internationale Veröffentlichungsnummer: WO 2018/130541

(56) Entgegenhaltungen:
- WO-A1-93/05388
- DE-A1-102008 046 706
- DE-A1-102010 023 711
- DE-A1-102011 018 292

## Beschreibung

Die Erfindung betrifft ein Verfahren sowie eine Vorrichtung zur Regeneration eines Partikelfilters in einem Abgaskanal eines Verbrennungsmotors.

Die aktuelle und eine zukünftig immer schärfer werdende Abgasgesetzgebung stellen hohe Anforderungen an die motorischen Rohemissionen und die Abgasnachbehandlung von Verbrennungsmotoren. Mit der Einführung der Abgasnorm EU6 für Ottomotoren wird ein Grenzwert für die Partikelemission vorgeschrieben, sodass es auch bei Ottomotoren zur Notwendigkeit des Einsatzes eines Partikelfilters kommen kann. Der Partikelfilter wird im Fahrbetrieb eines Kraftfahrzeuges mit Partikeln beladen, wobei der Abgasgegendruck im Abgaskanal mit der Beladung zunimmt. Diese Beladung des Partikelfilters kann beispielsweise über eine Differenzdruckmessung im Abgaskanal vor und nach dem Partikelfilter oder eine Modellierung in einem Steuergerät des Verbrennungsmotors bestimmt werden. Damit das Abgasgegendruckniveau nicht zu weit ansteigt, muss der Partikelfilter kontinuierlich oder periodisch regeneriert werden. Um eine thermische Oxidation der Rußpartikel auf dem Partikelfilter mit Sauerstoff durchzuführen, sind eine hinreichende Regenerationstemperatur sowie das gleichzeitige Vorliegen von Restsauerstoff im Abgas notwendig. Bedingt durch die Konstruktion des Partikelfilters ergibt sich im Betrieb zwangsweise eine radiale Temperaturverteilung auf dem Partikelfilter. Zu den Randbereichen hin nimmt die Temperatur durch die Wandwärmeverluste und die geringere Strömungsgeschwindigkeit ab. Die Höhe der Ausprägung wird maßgeblich durch den Betriebspunkt und die konstruktive Ausführung des Trichters und der Anströmung beeinflusst. Der Temperaturgradient kann in den Randbereichen dazu führen, dass die dort vorliegende Temperatur nicht mehr für eine Oxidation des Rußes ausreicht. Somit ergeben sich Bereiche im Partikelfilter, in denen sich immer weiter Ruß ansammelt, während andere Bereiche des Partikelfilters regeneriert werden. Dies führt zu Problemen bei der Regenerierbarkeit und zu einem ungünstigen Gegendruckverhalten des Partikelfilters. Darüber hinaus kann es im Fall einer unkontrollierten Regeneration zu einer Bauteilschädigung des Partikelfilters kommen.

Aus der DE 199 45 372 A1 ist ein Verfahren zur Steuerung der Regeneration eines Partikelfilters bekannt, bei dem über ein Kennfeld oder ein Modell die Regeneration des Partikelfilters durchgeführt wird. Das Modell beinhaltet einen Beladungswert des Partikelfilters, in dem die Fahrzeit und die Fahrstrecke seit der letzten Regeneration einfließen. Aus dem Beladungswert wird eine Zustandskennzahl ermittelt, bei deren Überschreitung eine Regeneration durchgeführt wird.

Auch wenn diese Verfahren schon mehrere Kenngrößen berücksichtigen, so gehen sie doch von einer gleichmäßigen Temperaturverteilung über den Partikelfilter sowie von einer gleichmäßigen Beladung des Partikelfilters aus.

Aus der DE 103 49 134 A1 ist ein Verfahren zur Regeneration eines Partikelfilters bekannt, bei dem eine Verteilung der Oberflächentemperatur mittels einer Thermographiekamera ermittelt wird und anhand der vorliegenden Temperaturverteilung versucht wird, durch die Wahl entsprechender Motorparameter oder eine entsprechende Anströmung des Partikelfilters eine möglichst gleichmäßige Temperaturverteilung über den Querschnitt des Partikelfilters zu erreichen.

Dieses Verfahren ist jedoch sehr aufwendig und kostenintensiv, sodass es sich vornehmlich für den Einsatz an einem Prüfstand und nicht für den Einsatz in einem Kraftfahrzeug eignet. Zudem kann es durch den Ruß im Abgas dazu kommen, dass das Sichtfenster für die Thermographiekamera verschmutzt, sodass dieser Einfluss zusätzlich kompensiert werden muss und die Messdauer begrenzt ist.

Aus der DE 10 2006 028 426 A1 ist eine Vorrichtung zur Bestimmung des Beladungszustands eines Partikelfilters bekannt, die an den porösen Wänden des Filterkörpers herausgefiltert wurden, ohne dass dabei eine experimentelle Bestimmung der Anordnung von Elektroden in oder an dem Filterkörper des Partikelfilters notwendig ist und die zur Filtrierung erforderliche Filterfläche verringert wird. Dabei umfasst der im Abgaskanal eines Verbrennungsmotors angeordnete Partikelfilter, der aus einem Gehäuse und einem Filterkörper besteht, zwei Elektroden, wobei die erste Elektrode an der dem Abgaseinlass zugeordneten Stirnfläche des Filterkörpers angeordnet ist und die zweite Elektrode an der dem Abgasauslass zugewandten Stirnfläche des Filterkörpers angeordnet ist und die Elektroden als in sich geschlossenes Ringgitter ausgeführt sind, wobei das Ringgitter eine Anzahl von gitterförmigen angeordneten Durchbrüchen aufweist.

Aus der DE 10 2011 018 292 A1 ist ein Verfahren zur Regeneration eines Dieselpartikelfilters bekannt, wobei ein Beanspruchungsniveau des Dieselpartikelfilters abgeschätzt wird und ein selektives Ansteuern eines elektrischen Strom zum selektiven Beheizen des Dieselpartikelfilter auf Grundlage des Beanspruchungsniveaus erfolgt.

Die DE 10 2008 046 706 A1 offenbart ein Abgasnachbehandlungssystem für einen Dieselmotor mit einem Partikelfilter, einem Sensor, einem elektrischen Heizelement sowie einem Steuermodul. Der Dieselpartikelfilter ist dabei in mehrere Zonen unterteilt. Der Sensor detektiert die Temperatur das Abgases. Das Steuermodul steuert den elektrischen Strom zu dem Heizelement, um eine der Zonen durch Konvektion zu beheizen und einen Regenerationsprozess des Dieselpartikelfilters auszulösen.

Aus der DE 10 2010 023 711 A1 ist ein Verfahren zur Erfassung der Beladungsdichte einer Partikelbeladung auf einem Dieselpartikelfilter bekannt. Dazu wird ein Steuersystem benutzt, welches ein Heizungssteuerungsmodul und ein Dieselpartikelfilterbeladungsmodul umfasst. Das Heizungssteuerungsmodul aktiviert selektiv eine elektrische Heizung zur Auslösung der Regeneration in einer der Zonen des Dieselpartikelfilters und deaktiviert die elektrische Heizung, nachdem die Regeneration abgeschlossen ist. Die Regeneration setzt sich entlang der Länge des Partikelfilters fort, nachdem die elektrische Heizung abgeschaltet ist. Das Beladungsmodul berechnet eine Beladung des Dieselpartikelfilters auf Grundlage einer Auslasstemperatur des Dieselpartikelfilters.

Nachteilig an den bekannten Verfahren ist jedoch, dass bei einem solchen Verfahren zwar eine relativ genaue Bestimmung der lokalen Beladung des Partikelfilters möglich ist, jedoch trotz einer Anhebung der Abgastemperatur aus einer Temperatur knapp oberhalb der Regenerationstemperatur zur Oxidation von Rußpartikeln in den Randbereichen diese Regenerationsbedingungen nicht zwangsläufig erreicht werden. Dies kann zu einer Rußansammlung in den Randbereichen und somit zu einem erhöhten Gegendruck im Abgaskanal führen, welche zu einem Mehrverbrauch des Verbrennungsmotors führen. Zudem besteht die Gefahr, dass diese Rußansammlung bei einem späteren Erreichen einer Temperatur oberhalb der Regenerationstemperatur zu einem unkontrollierten Rußabbrand und somit zu einer thermischen Schädigung oder Zerstörung des Partikelfilters führen kann.

Der Erfindung liegt nun die Aufgabe zugrunde, eine Rußansammlung in den Randbereichen des Partikelfilters zu verhindern und eine Regeneration in allen Bereichen des Partikelfilters sicherzustellen.

Erfindungsgemäß wird diese Aufgabe durch ein Verfahren zur Regeneration eines Partikelfilters im Abgaskanal eines Verbrennungsmotors gelöst, welches folgende Schritte umfasst:
- Ermittlung eines Beladungszustands des Partikelfilters durch ein Beladungsmodell oder durch eine Sensorik, wobei
- der Partikelfilter zur Modellbildung in mindestens zwei Zonen unterteilt wird, wobei
- für jede Zone des Partikelfilters separat ein Beladungszustand und/oder eine Temperatur ermittelt wird, wobei
- bei Erkennung der Notwendigkeit einer Regeneration zumindest einer der Zonen des Partikelfilters die Temperatur soweit angehoben wird, dass die Temperatur in allen Zonen des Partikelfilters oberhalb der Regenerationstemperatur zur Oxidation des im Partikelfilter zurückgehaltenen Rußes liegt.

Durch das erfindungsgemäße Verfahren wird eine Rußansammlung durch eine mangels Erreichen der zur Oxidation des im Partikelfilter zurückgehaltenen Rußes in der entsprechenden Zone des Partikelfilters vermieden, da die Regenerationstemperatur soweit angehoben wird, dass auch in den besonders stark gekühlten Zonen des Partikelfilters eine zur Oxidation des Rußes notwendige Temperatur erreicht wird. Dadurch kann der Abgasgegendruck niedrig gehalten werden, wodurch es nicht zu einer Verschlechterung des Wirkungsgrades des Verbrennungsmotors und somit zu einem Mehrverbrauch an Kraftstoff kommt. Des Weiteren wird die Gefahr eines unkontrollierten Rußabbrandes und einer damit verbundenen thermischen Schädigung des Partikelfilters minimiert, da auch bei ungünstigen Lastfolgen, beispielsweise einem längeren Betrieb im Stadtverkehr gefolgt von einer Volllast-Fahrt auf der Autobahn, an welche sich ein Schubphase anschließt, nicht lokal im Partikelfilter so große Rußmengen zurückgehalten werden, dass eine nachfolgende (unkontrollierte) Regeneration zu einer thermischen Schädigung des Partikelfilters führt.

Durch die in den abhängigen Ansprüchen angegebenen Merkmale sind vorteilhafte Verbesserungen und Weiterentwicklungen des im unabhängigen Anspruch angegebenen Verfahrens zur Regeneration eines Partikelfilters möglich.

In bevorzugter Ausgestaltung der Erfindung ist vorgesehen, dass der Querschnitt des Partikelfilters in radialer Richtung in mindestens zwei Ringe unterteilt wird. Dabei bildet jeder dieser Ringe eine Zone aus, deren Beladungszustand und/oder Temperatur separat überwacht oder modelliert wird. Da Partikelfilter im allgemeinen einen zylindrischen Querschnitt aufweisen und die Randbereiche aufgrund der Wandwärmeverluste eine geringere Temperatur als die zentrischen Bereiche des Partikelfilters aufweisen, ist es sinnvoll, den Partikelfilter in mindestens zwei Ringe zu unterteilen, wobei ein äußerer Ring die jeweils inneren Ringe umschließt. Der äußere Ring kann zusätzlich nochmals in mehrere Ringsegmente, insbesondere zwei bis vier Ringsegmente zu jeweils 180°, 120° oder 90° unterteilt werden, wenn die Wandwärmeverluste über die entsprechenden Ringsegmente unterschiedlich sind, was beispielsweise durch Spritzwasser, eine stärkere Anströmung mit Umgebungsluft oder durch benachbarte kalte oder heiße Bauteile der Fall sein kann. In diesem Fall ist das jeweils kälteste Segment des äußeren Rings maßgeblich, wenn es um die Erreichung der zur Oxidation der im Partikelfilter zurückgehaltenen Rußpartikel notwendigen Regenerationstemperatur geht.

In weiterer bevorzugter Ausgestaltung der Erfindung ist vorgesehen, dass für jeden Ring separat ein Beladungszustand ermittelt wird. Diese Ermittlung kann entweder durch ein geeignetes Beladungsmodell des Partikelfilters erfolgen, welches vorzugsweise in dem Steuergerät des Verbrennungsmotors abgelegt ist. Alternativ kann die Ermittlung des Beladungszustandes auch durch eine entsprechende Messvorrichtung ermittelt werden. Durch eine Ermittlung des Beladungszustands in jedem Ring kann festgestellt werden, ob es zu lokalen Rußansammlungen gekommen ist. Besonders bevorzugt ist dabei, wenn die erfindungsgemäße Regeneration des Partikelfilters dann eingeleitet wird, wenn in dem radial äußeren Ring ein Schwellenwert der zulässigen Beladung überschritten wird. Dabei muss die Abgastemperatur nur dann entsprechend weit angehoben werden, wenn eine lokale Rußansammlung in der äußeren Randzone festgestellt wird. Ansonsten kann eine Regeneration des Partikelfilters mit einer geringeren Temperaturanhebung erfolgen, wodurch eine kürzere Heizphase möglich ist und Kraftstoff eingespart werden kann.

Gemäß einer weiteren bevorzugten Ausführungsform des Verfahrens ist vorgesehen, dass die Temperatur des Partikelfilters von einer ersten Schwellentemperatur nur dann auf eine zweite Schwellentemperatur angehoben wird, wenn eine ungleichmäßige Beladung des Partikelfilters erkannt wird. Dabei liegt die erste Schwellentemperatur auf einem Niveau, bei dem eine Regeneration des Partikelfilters möglich, jedoch nicht unter allen Betriebsbedingungen sichergestellt ist. Die zweite Schwellentemperatur liegt oberhalb der ersten Schwellentemperatur und ermöglicht unter allen Betriebsbedingungen eine vollständige Regeneration aller Zonen des Partikelfilters, sodass auch stärker gekühlte Randzonen des Partikelfilters die zur Oxidation des Rußes notwendige Regenerationstemperatur erreichen. Ansonsten kann eine Regeneration mit einer niedrigeren Temperatur erfolgen, wodurch die Heizphasen verkürzt und somit Kraftstoff eingespart werden kann.

In einer weiteren vorteilhaften Ausgestaltung der Erfindung ist vorgesehen, dass die Beladung jedes Ringes durch ein Berechnungsmodell zum Partikeleintrag in den Partikelfilter und Partikelaustrag aus dem jeweiligen Ring des Partikelfilters ermittelt wird. Durch ein entsprechendes Berechnungsmodell kann eine Ungleichverteilung des im Partikelfilter zurückgehaltenen Rußes ohne zusätzliche Hardware-Komponenten ermittelt werden, sodass keine zusätzlichen Bauteile im Abgaskanal den Strömungswiderstand erhöhen. Auch wenn eine solche Anpassung des Berechnungsmodells zu einem (einmaligen) zusätzlichen Programmieraufwand führen, dürfte eine solche Lösung bei den im Automobilbau üblichen Stückzahlen auch günstiger als eine Lösung mit zusätzlichen Bauteilen zur Messung des Beladungszustands sein.

Erfindungsgemäß ist vorgesehen, dass bei einer Ermittlung eines ungünstigen Beladungszustands des Partikelfilters Maßnahmen zum Bauteilschutz des Partikelfilters eingeleitet werden. Um bei einer kritischen Beladung und darauf folgenden ungünstigen Betriebsbedingungen des Verbrennungsmotors eine thermische Schädigung des Partikelfilters zu vermeiden, kann bei Ermittlung eines solchen ungünstigen Beladungszustands das Verbrennungsluftverhältnis angepasst und insbesondere in Richtung unterstöchiometrisch verschoben werden. Alternativ oder zusätzlich können die in einem solchen Beladungszustand auftretenden Schubphasen vermieden oder unterbrochen werden, um das gleichzeitige Vorliegen von hohen Temperaturen und Sauerstoffüberschuss im Abgaskanal zu vermeiden.

Erfindungsgemäß wird ein Verbrennungsmotor mit einem Abgaskanal und einem im Abgaskanal des Verbrennungsmotors angeordneten Partikelfilter sowie mit einer Steuereinrichtung, welche einen computerlesbaren Programmalgorithmus zur Durchführung eines erfindungsgemäßen Verfahrens sowie gegebenenfalls erforderliche Kennfelder und dergleichen aufweist, vorgeschlagen. Durch eine entsprechende Steuereinrichtung kann auf einfache Weise der Verbrennungsmotor derart gesteuert oder geregelt werden, dass eine vollständige Regeneration des Partikelfilters erreicht wird und eine Bauteilschädigung des Partikelfilters, insbesondere eine thermische Schädigung des Partikelfilters, vermieden werden kann.

In einer bevorzugten Ausführungsform der Erfindung ist vorgesehen, dass an oder in dem Abgaskanal eine Sensorik zur Ermittlung des Beladungszustands in den unterschiedlichen Zonen des Partikelfilters angeordnet ist. Durch eine entsprechende Sensorik kann der Beladungszustand des Partikelfilters differenziert nach Zonen ermittelt werden, sodass der Beladungszustand und die Verteilung der Rußpartikel auf dem Partikelfilter ermittelt werden können. Somit kann insbesondere bei einer Ansammlung von Rußpartikeln in einer Randzone des Partikelfilters die Temperatur soweit angehoben werden, dass auch in der Randzone eine zur Oxidation der zurückgehaltenen Rußpartikel notwendige Temperatur erreicht wird. Besonders bevorzugt ist dabei, wenn die Sensorik eine Radiofrequenzsensorik aufweist. Über die Radiofrequenztechnik kann die Rußbeladung des Partikelfilters in mehreren Zonen ermittelt werden. Dabei ist ein Radiofrequenzsensor wesentlich weniger störungsanfällig als ein optischer Sensor, welcher durch den entstehenden Ruß verschmutzt und somit eine regelmäßige Reinigung erfordert.

Erfindungsgemäß ist vorgesehen, dass der Verbrennungsmotor ein fremdgezündeter Verbrennungsmotor nach dem Ottoprinzip ist. Während ein Dieselmotor in fast allen Betriebspunkten mit einem überstöchiometrischen Verbrennungsluftverhältnis betrieben wird und der zur Regeneration des Partikelfilters notwendige Sauerstoff quasi immer vorhanden ist, so ist die Regeneration eines Ottomotors deutlich komplexer, da Ottomotoren klassischer Weise mit einem stöchiometrischen Verbrennungsluftverhältnis betrieben werden und der zur Regeneration des Partikelfilters notwendige Sauerstoff nur in Schubphasen oder durch gezielte Ansteuerung der eingespritzten Kraftstoffmenge zur Verfügung steht.

Die Erfindung wird nachfolgend in Ausführungsbeispielen anhand der zugehörigen Zeichnungen erläutert. Es zeigen:
- Figur 1: einen Verbrennungsmotor mit einem Abgaskanal und einem Partikelfilter, bei dem ein erfindungsgemäßes Verfahren zur Regeneration des Partikelfilters durchgeführt werden kann,
- Figur 2: ein Schnitt durch einen Partikelfilter, an dem ein erfindungsgemäßes Verfahren durchgeführt wird,
- Figur 3: einen Partikelfilter im Abgaskanal eines Verbrennungsmotors, welcher eine ungleiche Beladung mit Rußpartikeln aufweist, sowie ein dazugehöriges Temperaturprofil über den Querschnitt des Partikelfilters, und
- Figur 4: einen weiteren Partikelfilter im Abgaskanal eines Verbrennungsmotors, bei dem die Temperatur durch ein erfindungsgemäßes Verfahren derart angehoben wurde, dass in allen Zonen des Partikelfilters die zur Regeneration notwendige Temperatur erreicht wird sowie ein dazugehöriges Temperaturprofil über den Querschnitt des Partikelfilters.

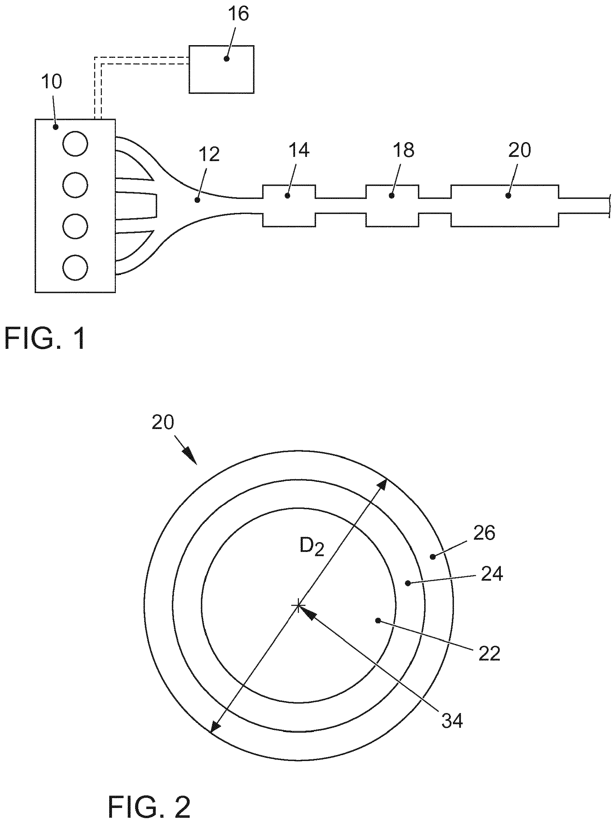

Figur 1 zeigt einen Verbrennungsmotor 10 mit einem Abgaskanal 12 und einem in dem Abgaskanal 12 angeordneten Partikelfilter 20. Der Verbrennungsmotor 10 ist vorzugsweise als Verbrennungsmotor zum Antrieb eines Kraftfahrzeuges, besonders bevorzugt als Ottomotor, ausgebildet. Der Verbrennungsmotor 10 verfügt vorzugsweise über eine Kraftstoff-Direkteinspritzung, bei der Kraftstoff direkt in die Zylinder des Verbrennungsmotors 10 eingespritzt wird. Die Verbrennungsprozesse in dem Verbrennungsmotor 10 werden über ein Steuergerät 16 gesteuert oder geregelt. Der Verbrennungsmotor 10 ist vorzugsweise als ein aufgeladener Verbrennungsmotor ausgebildet, welcher über einen Turbolader 14 oder einen Kompressor mit Luft versorgt wird. Alternativ kann der Verbrennungsmotor 10 auch als Saugmotor oder Brennkraftmaschine 10 einer anderen Gattung ausgebildet sein. Im Abgaskanal 12 des Verbrennungsmotors 10 ist vorzugsweise ein Drei-Wege-Katalysator 18 angeordnet.

Im Betrieb des Verbrennungsmotors 10 wird der Partikelfilter 20 mit Partikeln aus dem Verbrennungsprozess des Verbrennungsmotors 10 beladen. Diese Beladung kann mittels einer Modellierung im Steuergerät 16 oder durch eine Messung, insbesondere durch eine Differenzdruckmessung über den Partikelfilter 20 bestimmt werden. Damit das Abgasgegendruckniveau der Brennkraftmaschine 10 nicht zu weit ansteigt, muss der Partikelfilter 20 kontinuierlich oder periodisch regeneriert werden. Der Partikelfilter 20 kann zusätzlich eine katalytisch wirksame Beschichtung, beispielsweise eine Drei-Wege-katalytisch wirksame Beschichtung aufweisen. Um eine thermische Oxidation der im Partikelfilter 20 zurückgehaltenen Rußpartikel mit Sauerstoff durchzuführen, ist ein ausreichendes Temperaturniveau bei gleichzeitigem Vorliegen von Restsauerstoff im Abgas notwendig. Der Rußaustrag aus dem Partikelfilter 20 kann ebenfalls mittels einer Modellierung im Steuergerät 16 ermittelt werden. Alternativ kann der Beladungszustand des Partikelfilters 20 auch durch eine entsprechende Sensorik 28 gemessen werden, beispielsweise durch eine Sensorik 30, welche Radiowellen emittiert.

In Figur 2 ist ein Querschnitt durch den Körper 36 des Partikelfilters 20 dargestellt. Wie bereits erwähnt sind die maßgeblichen Faktoren zur Regeneration der im Partikelfilter 20 zurückgehaltenen Rußpartikel ein Sauerstoffüberschuss und eine ausreichende Temperatur des durch den Partikelfilter 20 strömenden Abgases. Bedingt durch die Konstruktion des Partikelfilters 20 ergibt sich im Betrieb zwangsweise eine radiale Temperaturverteilung auf dem Partikelfilter 20, wobei die innere, einer Mittelachse 34 zugewandte Zone 22 eine höhere Temperatur als die Randzone 26 aufweist. Die Zonen 22, 24, 26 sind dabei als konzentrische Ringe um die Mittelachse 34 des Partikelfilters 20 angeordnet. Durch die Wärmeverluste über die Wand des Partikelfilters 20 und durch eine geringere Durchströmung mit heißem Abgas nimmt die Temperatur zur Wand des Partikelfilters 20 hin ab. Die Höhe der Ausprägung dieses Temperaturabfalls wird maßgeblich durch den Betriebspunkt und die konstruktive Ausführung des Öffnungstrichters 38 und der Anströmung des Körpers 36 des Partikelfilters 20 beeinflusst. Dieser Temperaturgradient kann in den Randbereichen, insbesondere in der dritten Zone 26, dazu führen, dass die dort vorliegende Temperatur nicht mehr für eine Oxidation des Rußes ausreicht. Somit ergeben sich Zonen 26 des Partikelfilters 20, in denen sich immer weiter Ruß anlagert, während andere heißere Zonen 22 regelmäßig regeneriert werden. Dies führt zu Problemen in der Regenerierbarkeit und dem Gegendruckverhalten des Partikelfilters 20. Darüber hinaus kann es im Fall einer unkontrollierten Regeneration des Partikelfilters 20 zu einer thermischen Schädigung des Partikelfilters 20 kommen. Dies ist insbesondere dann möglich, wenn auf eine Vielzahl von Kurzstreckenfahrten und einer damit verbundenen Rußansammlung im Partikelfilter 20 ein Betriebspunkt angesteuert wird, bei dem von sehr hohen Abgastemperaturen auf einen Schubbetrieb gewechselt wird.

Bei dem erfindungsgemäßen Verfahren wird die Regenerationstemperatur des Partikelfilters 20 auf Basis der Rußverteilung in den Zonen 22, 24, 26 des Körpers 36 des Partikelfilters 20 gesteuert. Wird eine ungleichmäßige Rußverteilung in den einzelnen Zonen 22, 24, 26 erkannt, wird die Regenerationstemperatur T_{reg} durch das Motormanagement soweit angehoben, dass auch in der Randzone 26 eine zur Oxidation des Rußes notwendige Temperatur erreicht wird.

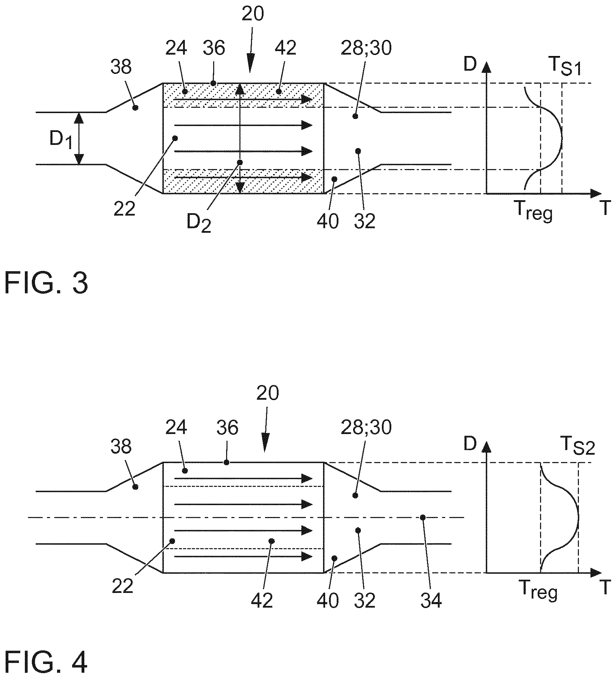

In Figur 3 ist ein Partikelfilter 20 dargestellt, wie er heutzutage vielfach bei Kraftfahrzeugen mit Verbrennungsmotor 10 eingesetzt wird. Der Partikelfilter 20 weist einen Öffnungstrichter 38, einen Körper 36 sowie einen Sammeltrichter 40 auf, dabei ist der Durchmesser D₂ des mit dem Filtermaterial 42 versehenen Körpers 36 größer als der Durchmesser D₁ des Abgaskanals 12 stromaufwärts und stromabwärts des Partikelfilters 20. Entlang einer Mittelachse 34 ist eine erste zentrische Zone 22 ausgebildet, welche wärmer als eine zweite Zone 24 im Randbereich des Partikelfilters 20 ist. Die Temperaturverteilung über den Durchmesser D₂ des Filterkörpers 36 ist in Figur 3 dargestellt. Dabei ist zu erkennen, dass in der zweiten Zone 24 die Temperatur zur Oxidation des Rußes nicht erreicht wird, während die Temperatur T in der ersten Zone auf eine erste Schwellentemperatur T_{S1} angehoben wird, welche oberhalb der Regenerationstemperatur T_{reg} liegt. Dabei stellt sich durch die bekannten fluiddynamischen und thermodynamischen Gesetze in der mittleren Zone 22 eine höhere Strömungsgeschwindigkeit und ein geringerer Wärmeverlust ein, während die äußere Zone 24 langsamer durchströmt wird und zudem noch einen höheren Wärmeverlust durch die Außenwand des Partikelfilters 20 aufweist. Dies kann wie in Figur 3 dargestellt dazu führen, dass sich in der äußeren Zone 24 Ruß ansammelt, während in der inneren Zone 22 eine partielle Regeneration des Partikelfilters 20 erfolgt. Dabei lagert sich in der äußeren Zone 24 ein Rußring ab, welcher nur durch eine Erhöhung der Abgastemperatur regeneriert werden kann. Dabei muss sichergestellt sein, dass auch die Außenbereiche 24, 26 des Partikelfilters oberhalb der Regenerationstemperatur T_{reg} des Partikelfilters 20 liegen. Wird mit solch einem Rußring ein hoher Lastpunkt mit sehr hoher Abgastemperatur angefahren, können sich bauteilschädigende Zustände auf dem Partikelfilter 20 einstellen. Dies ist beispielsweise möglich, wenn auf eine Vielzahl von innerstädtischen Fahrten eine hochlastige Autobahnfahrt erfolgt, an die sich eine Schubphase anschließt, bei der große Mengen von Frischluft in den Abgaskanal 12 und somit in den Partikelfilter 20 gelangen.

Um den Beladungszustand des Partikelfilters 20 zu ermitteln, kann eine entsprechende Sensorik 28, insbesondere eine Radiofrequenzsensorik 30 an dem Partikelfilter 20 vorgesehen sein, um die Beladungszustände der einzelnen Zonen des Partikelfilters 20 zu ermitteln. Alternativ kann dies auch durch ein in dem Steuergerät 16 abgelegtes Beladungsmodell erfolgen. Ferner ist in dem Sammeltrichter 40 mindestens ein Temperatursensor 32 angeordnet, um eine Abgastemperatur stromabwärts des Partikelfilters 20 zu ermitteln und anhand der ermittelten Temperatur(en) eine Temperaturverteilung über den Querschnitt des Partikelfilters 20 zu modellieren. Alternativ kann die Abgastemperatur auch durch die entsprechenden Parameter des Verbrennungsmotors 10 und ein entsprechendes, in dem Steuermodell 16 abgelegtes Berechnungsmodell modelliert werden.

Erfindungsgemäß erfolgt die Regeneration des Partikelfilters nun wie in Figur 4 dargestellt. Wird eine inhomogene Rußverteilung über den Zonen 22, 24, 26 des Partikelfilters 20 erkannt, wird durch das in dem Steuergerät 16 abgelegte Motormanagement eine erhöhte Abgastemperatur T_{S2} angefordert, welche so gewählt ist, dass für den aktuellen Betriebszustand des Partikelfilters 20, also für den Abgasmassenstrom durch den Partikelfilter 20 sowie für die Rußbeladung, die Temperatur auch in den äußeren Zonen 24, 26 so hoch ist, dass der dort zurückgehaltene Ruß oxidiert werden kann. Ist die Regeneration des Partikelfilters 20 in der äußeren Zone 24, 26 abgeschlossen, welches durch die Sensorik 28 oder ein entsprechendes Beladungsmodell erkannt wird, wird die Regeneration des Partikelfilters 20 beendet. Dadurch wird eine homogene Verteilung der nachfolgenden Rußbeladung gewährleistet.

Somit ist sichergestellt, dass jede aktive Regeneration des Partikelfilters 20 stets nur mit einer notwendigen Abgastemperatur T_{S1}, T_{S2} durchgeführt wird, was zu einer Kraftstoffersparnis führt. Die Regenerationssolltemperatur des Partikelfilters 20 kann dabei abhängig vom Beladungszustand und vom Betriebspunkt variabel beeinflusst werden. Mit diesem Verfahren kann verhindert werden, dass der Partikelfilter 20 permanent, das heißt bei jeder Regeneration, mit einer erhöhten Regenerationstemperatur T_{S2} regeneriert wird, sondern nur dann, wenn eine entsprechende Beladung der äußeren Zone 24, 26 dies erforderlich macht.

### Bezugszeichenliste

- 10: Verbrennungsmotor
- 12: Abgaskanal
- 14: Turbolader
- 16: Steuergerät
- 18: Drei-Wege-Katalysator
- 20: Partikelfilter
- 22: erste Zone / erster Ring
- 24: zweite Zone / zweiter Ring
- 26: dritte Zone / dritter Ring
- 28: Sensorik
- 30: Radiofrequenzsensor
- 32: Temperatursensor
- 34: Mittelachse
- 36: Körper des Partikelfilters
- 38: Öffnungstrichter
- 40: Sammeltrichter
- 42: Filtermaterial
- D₁: Durchmesser des Abgaskanals
- D₂: Durchmesser des Partikelfilters
- T: Temperatur
- T_{S1}: erste Schwellentemperatur
- T_{S2}: zweite Schwellentemperatur
- T_{reg}: Regenerationstemperatur

## Patentansprüche

1. Verfahren zur Regeneration eines Partikelfilters (20) im Abgaskanal (12) eines fremdgezündeten Verbrennungsmotors (10) nach dem Ottoprinzip, umfassend folgende Schritte:
- Ermittlung eines Beladungszustands des Partikelfilters (20) durch ein Beladungsmodell oder durch eine Sensorik, wobei
- der Partikelfilter (20) zur Modellbildung in mindestens zwei Zonen (22, 24) unterteilt wird, wobei für jede Zone (22, 24) des Partikelfilters (20) separat ein Beladungszustand und/oder eine Temperatur ermittelt wird, wobei
- bei Erkennung der Notwendigkeit einer Regeneration (20) zumindest einer Zone (22, 24) des Partikelfilters (20) die Temperatur soweit angehoben wird, dass die Temperatur in allen Zonen (22, 24) des Partikelfilters (20) oberhalb der Regenerationstemperatur zur Oxidation des im Partikelfilter (20) zurückgehaltenen Rußes liegt,
**dadurch gekennzeichnet, dass**
- bei einer Ermittlung eines ungünstigen Beladungszustands des Partikelfilters (20) Maßnahmen zum Bauteilschutz des Partikelfilters (20) eingeleitet werden, wobei
- bei einer kritischen Beladung das Verbrennungsluftverhältnis in Richtung unterstöchiometrisch verschoben wird und/oder Schubphasen vermieden oder unterbrochen werden, um das gleichzeitige Vorliegen von hohen Temperaturen und Sauerstoffüberschuss im Abgaskanal zu vermeiden.

2. Verfahren nach Anspruch 1, **dadurch gekennzeichnet, dass** der Querschnitt des Partikelfilters (20) in radialer Richtung in mindestens zwei Ringe (22, 24, 26) unterteilt wird, wobei jeder dieser Ringe (22, 24, 26) eine Zone (22, 24) ausbildet, deren Beladungszustand und/oder Temperatur separat überwacht oder modelliert wird.

3. Verfahren nach Anspruch 2, **dadurch gekennzeichnet, dass** pro Ring (22, 24, 26) jeweils eine Beladung des Partikelfilters (20) ermittelt wird.

4. Verfahren nach Anspruch 3, **dadurch gekennzeichnet, dass** eine Regeneration des Partikelfilters (20) eingeleitet wird, wenn der radial äußerste Ring (26) einen Schwellenwert der Beladung überschritten hat.

5. Verfahren nach einem der Ansprüche 2 bis 4, **dadurch gekennzeichnet, dass** die Beladung jedes Ringes (22, 24, 26) durch ein Berechnungsmodell zum Partikeleintrag in den Partikelfilter (20) und Partikelaustrag aus dem jeweiligen Ring (22, 24, 26) des Partikelfilters (20) ermittelt wird.

6. Verbrennungsmotor (10) mit einem Abgaskanal (12) und einem im Abgaskanal (12) des Verbrennungsmotors (10) angeordneten Partikelfilter (20) sowie mit einer Steuereinrichtung (16), welche einen computerlesbaren Programmalgorithmus zur Durchführung eines Verfahrens gemäß einem der Ansprüche 1 bis 5 sowie gegebenenfalls erforderliche Kennfelder aufweist.

7. Verbrennungsmotor (10) nach Anspruch 6, **dadurch gekennzeichnet, dass** an oder in dem Abgaskanal (12) eine Sensorik (28) zur Ermittlung des Beladungszustands in den unterschiedlichen Zonen (22, 24) des Partikelfilters (20) angeordnet ist.

8. Verbrennungsmotor (10) nach Anspruch 7, **dadurch gekennzeichnet, dass** die Sensorik (28) eine Radiofrequenzsensorik (30) aufweist.

## Claims

1. Method for regeneration of a particle filter (20) in the exhaust-gas channel (12) of an externally ignited internal combustion engine (10) operating in accordance with the Otto principle, comprising the following steps:
- ascertaining a loading state of the particle filter (20) by means of a loading model or by means of a sensor arrangement, wherein
- the particle filter (20) is, for modelling, divided into at least two zones (22, 24), wherein a loading state and/or a temperature is ascertained separately for each zone (22, 24) of the particle filter (20), wherein,
- if the need for a regeneration (20) of at least one zone (22, 24) of the particle filter (20) is identified, the temperature is raised to such an extent that the temperature in all zones (22, 24) of the particle filter (20) lies above the regeneration temperature for the oxidation of the soot retained in the particle filter (20),
**characterized in that**,
- if an unfavourable loading state of the particle filter (20) is ascertained, measures for component protection of the particle filter (20) are initiated, wherein,
- in the presence of a critical loading, the combustion air ratio is shifted in the direction of substoichiometric, and/or overrun phases are avoided or interrupted in order to avoid the simultaneous presence of high temperatures and an excess of oxygen in the exhaust-gas channel.

2. Method according to Claim 1, **characterized in that** the cross section of the particle filter (20) is divided in a radial direction into at least two rings (22, 24, 26), wherein each of said rings (22, 24, 26) forms a zone (22, 24), the loading state and/or temperature of which is separately monitored or modelled.

3. Method according to Claim 2, **characterized in that** a loading of the particle filter (20) is ascertained respectively for each ring (22, 24, 26).

4. Method according to Claim 3, **characterized in that** a regeneration of the particle filter (20) is initiated if the radially outermost ring (26) has exceeded a threshold value of the loading.

5. Method according to any of Claims 2 to 4, **characterized in that** the loading of each ring (22, 24, 26) is ascertained by means of a mathematical model relating to the introduction of particles into the particle filter (20) and discharge of particles out of the respective ring (22, 24, 26) of the particle filter (20).

6. Internal combustion engine (10) having an exhaust-gas channel (12) and having a particle filter (20) arranged in the exhaust-gas channel (12) of the internal combustion engine (10) and having a control device (16) which has a computer-readable program algorithm for carrying out a method according to any of Claims 1 to 5 and possibly required characteristic maps.

7. Internal combustion engine (10) according to Claim 6, **characterized in that**, on or in the exhaust-gas channel (12), there is arranged a sensor arrangement (28) for ascertaining the loading state in the different zones (22, 24) of the particle filter (20).

8. Internal combustion engine (10) according to Claim 7, **characterized in that** the sensor arrangement (28) has a radio frequency sensor arrangement (30).

## Revendications

1. Procédé de régénération d'un filtre à particules (20) dans le conduit de gaz d'échappement (12) d'un moteur à combustion interne à allumage commandé (10) selon le principe du moteur à essence, comprenant les étapes suivantes :
- la détermination d'un état de chargement du filtre à particules (20) par un modèle de chargement ou par un système de capteurs, dans lequel
- le filtre à particules (20) est subdivisé en au moins deux zones (22, 24) pour la modélisation, un état de chargement et/ou une température étant déterminés séparément pour chaque zone (22, 24) du filtre à particules (20), dans lequel
- si la nécessité d'une régénération (20) d'au moins une zone (22, 24) du filtre à particules (20) est reconnue, la température est augmentée jusqu'à ce que la température se trouve dans toutes les zones (22, 24) du filtre à particules (20) au-dessus de la température de régénération pour l'oxydation de la suie retenue dans le filtre à particules (20),
**caractérisé en ce que**
- lors d'une détermination d'un état de chargement défavorable du filtre à particules (20), des mesures pour protéger les composants du filtre à particules (20) sont lancées, dans lequel
- lors d'un chargement critique, le rapport d'air de combustion est décalé dans le sens sous-stœchiométrique et/ou des phases de poussée sont évitées ou interrompues pour éviter la présence simultanée de températures élevées et d'un excès d'oxygène dans le conduit de gaz d'échappement.

2. Procédé selon la revendication 1, **caractérisé en ce que** la section transversale du filtre à particules (20) est subdivisée en au moins deux anneaux (22, 24, 26) dans la direction radiale, chacun de ces anneaux (22, 24, 26) réalisant une zone (22, 24) dont l'état de chargement et/ou la température sont surveillés ou modélisés séparément.

3. Procédé selon la revendication 2, **caractérisé en ce que** pour chaque anneau (22, 24, 26), respectivement un chargement du filtre à particules (20) est déterminé.

4. Procédé selon la revendication 3, **caractérisé en ce qu'**une régénération du filtre à particules (20) est lancée si l'anneau radialement le plus à l'extérieur (26) a dépassé une valeur seuil du chargement.

5. Procédé selon l'une quelconque des revendications 2 à 4, **caractérisé en ce que** le chargement de chaque anneau (22, 24, 26) est déterminé par un modèle de calcul pour l'apport en particules dans le filtre à particules (20) et le débit de particules à partir de l'anneau (22, 24, 26) respectif du filtre à particules (20).

6. Moteur à combustion interne (10), comprenant un conduit de gaz d'échappement (12) et un filtre à particules (20) disposé dans le conduit de gaz d'échappement (12) du moteur à combustion interne (10), et comprenant un dispositif de commande (16) qui présente un algorithme de programme lisible par ordinateur pour exécuter un procédé selon l'une quelconque des revendications 1 à 5 ainsi que le cas échéant des diagrammes caractéristiques.

7. Moteur à combustion interne (10) selon la revendication 6, **caractérisé en ce que** sur ou dans le conduit de gaz d'échappement (12), un système de capteurs (28) est disposé pour déterminer l'état de chargement dans les différentes zones (22, 24) du filtre à particules (20).

8. Moteur à combustion interne (10) selon la revendication 7, **caractérisé en ce que** le système de capteurs (28) présente un système de capteurs haute fréquence (30).
